# EUROPEAN PATENT APPLICATION

(11) **EP 0 905 099 A2**
(43) Date of publication of application: **31.03.1999**
(21) Application number: 98307892.4
(22) Date of filing: 29.09.1998
(51) Int. Cl.: C03B 37/15

(54) **Shaping mold and shaping process**

(30) Priority: 30.09.1997 JP 265719/97; 01.09.1998 JP 246882/98
(71) Applicant: Hoya Corporation, Shinjuku-ku, Tokyo 161-0032 (JP)
(72) Inventor: Yoshida, Masahiro, Hidaka-shi, Saitama 350-1213 (JP); Ohgami, You, Sagamihara-shi, Kanagawa 229-0032 (JP)
(74) Representative: Kraus, Walter, Dr.

(57) **Abstract**

A shaping mold comprising an upper mold member (6), a lower mold member (2) and a sleeve member (3), the sleeve member (3) being constituted of a plurality of sleeve member parts (3a, 3b) having transfer shaping surfaces, the sleeve member parts (3a, 3b) being to be fixed to side surfaces of the upper mold member (6) or the lower mold member (2) under force in a tightly attached state at a time of use, the shaping mold enabling the production of the shaped article of high accuracy such as an optical fibre guide block.

## Description

The present invention relates to a shaping mold and a shaping process, particularly to a shaping mold comprising an upper mold member, a lower mold member and a sleeve member and a shaping process using said shaping mold.

A mold shaping of hot-molding a shapeable material by means of a shaping mold (also called "hot press molding") having a cavity having a predetermined form permits the production of shaped articles having a predetermined form with a high productivity after the shaping mold for the above mold shaping is once prepared, and shaped articles having a variety of forms are therefore produced by mold shaping. Further, since the mold shaping can be used for mass-producing shaped articles having high accuracy, attempts are being made to produce articles required to have high accuracy such as optical fiber fixing members including an optical fiber guide block.

The above optical fiber guide block is a thin-sheet-like member having fixing groove or grooves (e.g., V groove(s)) for fixing 1 to several optical fibers in predetermined position(s), for example, like a V-groove substrate shown in Fig. 2 of JP-A-7-5341. The work accuracy which the above fixing groove or grooves is or are required to satisfy differs depending upon kinds of optical fiber(s), while the fixing groove or grooves is or are made so as to have a positional accuracy of ±0.5 to ± 1.0 µm with regard to the center of each optical fiber (center in diameter direction) when the optical fiber or fibers to be fixed is or are single-mode optical fiber(s).

Further, although differing depending upon use, most optical fiber guide blocks have a lower-level part having its upper surface formed lower than the level of the surface where the above fixing groove(s) is/are formed. The above lower-level part is suitable for fixing the whole of optical fiber(s) and coating(s) thereof when the optical fiber or fibers is or are protected with coating(s) like an optical fiber tape. Optical fibers have low strength and are difficult to handle. However, when it is arranged to fix an optical fiber end portion exposed, for example, from an optical fiber tape to the above fixing groove in a state where the whole of an optical fiber tape with a coating is fixed to, or placed on, the above lower-level part, it is easier to handle the optical fiber.

The material for the above optical fiber guide block is selected from glass, glass-ceramic, ceramic, silicon, a resin or a composite material formed from a resin and an inorganic filler. In recent years, it is general practice to fix optical fibers to an optical fiber fixing member with a ultraviolet-curable adhesive, so that glass having good transmittance to ultraviolet light is used in many cases.

An optical fiber guide block formed of glass is conventionally produced by making fixing grooves in a glass plate with a diamond grinder and cutting the glass plate in a predetermined form. Since, however, it is required to work the glass to form the fixing grooves having high accuracy, its production cost increases. Further, when the above lower-level part is formed, the amount of work increases, which results in a further increase in the production cost.

It has been therefore proposed to produce optical fiber guide blocks by mold shaping (hot press molding), as is disclosed in JP-A-8-211244 and JP-A-8-292332.

Since an optical fiber guide block is a thin-sheet-like block as described above and is small in size, a shaping mold comprising three mold members such as an upper mold member, a lower mold member and a sleeve member is generally used for the following reason when mold shaping is employed for producing the optical fiber guide block.

That is, when it is attempted to constitute the shaping mold of two members of a male mold member and a female mold member (one of these is an upper mold member and the other is a lower mold member), one of two shaping surfaces such as a transfer shaping surface for shaping the upper surface (surface on a side where fixing groove(s) is/are formed) of an optical fiber guide block and a transfer shaping surface for shaping the bottom surface thereof and transfer shaping surfaces for shaping side surfaces of the optical fiber guide block are required to be formed in the female mold member. Since, however, an optical fiber guide block is a small and high-precision member formed of a thin-sheet-like block, it is difficult to produce the above female mold member. In contrast, when three members of an upper mold member, a lower mold member and a sleeve member are employed to constitute a shaping mold, it is easier to produce the intended shaping mold. Therefore, a shaping mold constituted of three members of an upper mold member, a lower mold member and a sleeve member is generally used for producing an optical fiber guide block by mold shaping, and a cylindrical part formed of one member is used as the above sleeve member.

A mold shaping method is suitable for mass-producing shaped articles having high accuracy. However, in the end portion of a fixing groove which is an essential part of an optical fiber guide block and its vicinities, particularly, in the end portion where an end face of an optical fiber is to be positioned and its vicinities when the optical fiber is fixed in a fixing groove (an area including the above end portion of a fixing groove and its vicinities in an optical fiber guide block will be referred to as "optical interconnection end face vicinity" hereinafter), defects (e.g., an undulation, projection, swelling (bump) and molding burr) which worsen the positional accuracy of an optical fiber are not allowable, and it is difficult to produce an optical fiber guide block free of these defects by any mold shaping technique available at present, for the following reasons.

That is, a shapeable material does not uniformly deform when mold-shaped. For example, when a plate-like glass shapeable preform is mold shaped, central portions of its sides are outwardly deformed to a greater degree, and corner portions are deformed to a smaller degree. Further, mold members (upper mold member, lower mold member and sleeve member) constituting a conventional shaping mold have some clearances between them for a structural reason. When it is attempted to obtain an optical fiber guide block substantially free of any portion not filled with a shapeable material, shapeable material is liable to enter the above clearances to form molding burrs. And, the occurrence of a swelling (bump) which is only about 1 µm high causes a problem, to say nothing of a molding burr, as far as the above optical interconnection end face vicinity of an optical fiber guide block is concerned.

Further, an optical fiber guide block is a small and high-precision member formed of a thin-sheet-like block as described above. When a single cylindrical member is employed as a sleeve member of a shaping mold used for mold shaping the above optical fiber guide block, therefore, working on a cylindrical material to produce a hollow portion of the cylindrical member is greatly limited. As a result, not only it is difficult to increase the surface accuracy of transfer shaping surfaces, but also edge portions formed by the inner surfaces of the sleeve member (cylindrical member) are inevitably formed as curved surfaces.

As a consequence, edge portions formed by side surfaces of an upper mold member and edge portions formed by side surfaces of a lower mold member are also required to be formed as curved surfaces. However, it is very difficult to produce the sleeve member and the upper and lower mold members so as to bring the curvature of the above curved surfaces of inner surfaces of the sleeve member and the curvatures of the above curved surfaces of the upper and lower mold members into conformity. When the above curvature in the sleeve member is greater than the curvature in the upper or lower mold member, the upper or lower mold member cannot be inserted into the sleeve member. When the above curvature in the sleeve member is too small as compared with the curvature in the upper or lower mold member, an extreme clearance is formed.

It is an object of the present invention to provide a shaping mold for easily producing, by mold shaping, a shaped article required to have high accuracy which does not allow any fine swelling (bump), to say nothing of a molding burr, and a shaping process of producing the above shaped article.

According to the present invention, the above object of the present invention is achieved by a shaping mold having an upper mold member, a lower mold member and a sleeve member, the upper or lower mold member being used as a movable mold member which is movable relative to the sleeve member when mold shaping is carried out, the sleeve member being for shaping side surfaces of a shaped article with transfer shaping surfaces of the sleeve member, the sleeve member being constituted of a plurality of sleeve member parts having transfer shaping surfaces, a plurality of the sleeve member parts being forcibly fixed to side surfaces of the upper mold member or side surfaces of the lower mold member in a state where the sleeve member parts are tightly attached to the side surfaces of the upper mold member or the side surfaces of the lower mold member (the above shaping mold will be referred to as "shaping mold I" hereinafter).

According to the present invention, further, the above object of the present invention is also achieved by a shaping mold having an upper mold member, a lower mold member and a sleeve member, one of the upper mold member and the lower mold member having a transfer shaping surface in which a fine transfer pattern is formed and being a fixed mold member tightly fixed to the sleeve member so as not to have a clearance with the sleeve member to prevent shapeable material from entering the clearance, the other of the upper mold member and the lower mold member being a movable mold member which is movable relative to the sleeve member, a positional accuracy of the fine transfer pattern which positional accuracy is defined on the basis of one side surface of the fixed mold member and a positional accuracy of the fine transfer pattern which positional accuracy is defined on the basis of an inner side surface of the sleeve member tightly attached to the above one side surface of the fixed mold member when the fixed mold member is tightly attached and fixed to the sleeve member, being substantially the same (the above shaping mold will be referred to as "shaping mold II" hereinafter).

According to the present invention, further, the above object of the present invention is achieved by a shaping process of shaping a preform into a shaped article having a predetermined form with the above shaping mold I (the above method will be referred to as "method I" hereinafter).

According to the present invention, further, the above object is also achieved by a shaping process of producing a shaped article, which comprises placing a preform in a cavity of the above shaping mold II of the present invention, mold shaping the preform with the shaping mold II, and thereby obtaining a shaped article to which (i) a fine transfer pattern formed in a transfer shaping surface of the fixed mold member and (ii) at least part of a transfer pattern formed in that inner side surface of the sleeve member of which a positional accuracy of the fine transfer pattern which positional accuracy is defined on the basis is substantially the same as a positional accuracy of the fine transfer pattern which positional accuracy is defined on the basis of that side surface of the fixed mold member which is tightly attached and fixed to the above inner side surface of the sleeve member were transferred (the above method will be referred to as "method II" hereinafter).

When the shaping mold of the present invention is used, there can be easily obtained, by mold shaping, a shaped article which is required to have high accuracy which does not allow any fine swelling (bump), to say nothing of a molding burr.

The present invention, therefore, enables the mass-production of shaped articles required to have high accuracy.

In the accompanying drawings:
Fig. 1(a) is a schematic plan view showing the arrangement of a lower mold member, sleeve member parts, a sleeve member and an outer frame when a shaping mold obtained in Example 1 is used. Fig. 1(b) is a schematic cross-sectional view taken along a line A-A in Fig. 1(a). Fig. 1(c) is a schematic cross-sectional view taken along a line B-B in Fig. 1(a).
Fig. 2 is a schematic cross-sectional view showing the positional relationship among an upper mold member, a lower mold member, sleeve member parts, a sleeve member, an outer frame and a glass preform when a shaping mold obtained in Example 1 is used for mold shaping.
Figs. 3(a) to 3(d) are schematic plan views showing the arrangement state of a lower mold member, sleeve member parts, a sleeve member and an outer frame when a shaping mold obtained in Example 2 is used.
Figs. 4(a) to 4(d) are plan views showing examples of forms of sleeve member parts constituting the shaping mold of the present invention.

### Detailed Description of the Invention

The present invention will be explained in detail hereinafter.

First, the shaping mold I of the present invention will be explained.

The shaping mold I of the present invention has an upper mold member, a lower mold member and a sleeve member as described above, and when it is used, the above upper or lower mold member is used as a movable mold member relative to the sleeve member and the sleeve member is for shaping side surfaces of a shaped article with the transfer shaping surfaces of the sleeve member.

The above movable mold member may be a member which moves itself or which does not move itself but is seen moved relative to the sleeve member since the sleeve member moves. One of the upper and lower mold members is used as a member which does not move relative to the sleeve member (this mold member will be referred to as "fixed mold member" hereinafter). In the above shaping mold having the above movable mold member and the above fixed mold member, a preform placed between the movable mold member and the fixed mold member is pressed and shaped by bringing near the movable mold member and the fixed mold member positioned away from each other in a predetermined distance.

Concerning a shaping mold constituted of three mold members of an upper mold member, a lower mold member and a sleeve member, it is known to use one of the upper and lower mold members as a movable mold member movable relative to the sleeve member and the other as a fixed mold member not movable relative to the sleeve member, it is known to press and shape a preform by bringing near the upper mold member and the lower mold member positioned away from each other in a predetermined distance, and it is also known to shape side surfaces of a preform with transfer shaping surfaces of the sleeve member.

The most distinguishing feature of the shaping mold I of the present invention is that the above sleeve member is constituted of a plurality of sleeve member parts each of which has transfer shaping surface(s) and that a plurality of the sleeve member parts are fixed to side surfaces of the above upper or lower mold member under force in a state where they are tightly attached thereto when they are used, that is, the sleeve member parts are fixed to side surfaces of the fixed mold member in a state where they are tightly attached thereto.

The reason for constituting the sleeve member with a plurality of the above sleeve member parts for the shaping mold I is as follows. When the sleeve member is constituted as described above, a plurality of the sleeve member parts can be fixed to side surfaces of the fixed mold member under force in a state where they are tightly attached to the side surfaces when they are used, whereby a clearance between each side surface of the fixed mold member and each side surface of the sleeve member can be nearly removed. And, since the above clearance is nearly removed, there can be prevented a phenomenon that a shapeable material enters the clearance to form a molding burr and a fine swelling (bump).

The means of fixing the sleeve member parts to the side surfaces of the fixed mold member under force in a tightly attached state may be basically any means so long as the above clearance can be nearly removed. However, means which utilize a thermal expansion coefficient difference between the sleeve member and the fixed mold member for fixing under force involve some risks of the mold chipping or the accuracy of the transfer shaping surfaces decreasing since an excess pressure is liable to be exerted on the fixed mold member.

If a working easiness in disassembling and assembling the shaping mold I is taken account of, preferably, screws are used to fixe the sleeve member parts to side surfaces of the fixed mold member under force in a tightly attached state. When screws are used, it is preferred to employ a constitution in which an outer frame specialized for fixing the sleeve member parts to side surfaces of the fixed mold member is prepared and the sleeve member parts are fixed to the above side surfaces in a tightly attached state with a force exerted by the screws threaded through the outer frame on the sleeve member parts rather than directly fixing the sleeve member parts to the above side surfaces with the screws. More preferably, the sleeve member parts are fixed to the side surfaces of the fixed mold member under force in a tightly attached state by threading the screws such that the screws reach the sleeve member parts through the outer frame. The above method of using the specialized outer frame substantially removes some risks of the strength of the fixed mold member decreasing and a decrease in the accuracy of the transfer shaping surface being caused. Further, there is another advantage that even if the transfer shaping surfaces of the upper and lower mold members are very small, the sleeve member parts can be easily fixed to the side surfaces of the fixed mold member under force in a tightly attached state.

The formation of a molding burr and a fine swelling (bump) caused by the entering of a shapeable material into a clearance between each side surface of the fixed mold member and the sleeve member can be prevented by keeping the sleeve member parts fixed to the side surfaces of the fixed mold member under force in a tightly attached state as described above when the sleeve member parts are used. However, a clearance between the sleeve member parts may cause a molding burr or a fine swelling (bump) on a shaped article since a shapeable material may enter the clearance. For preventing the above molding burr or fine swelling (bump), it is preferred to tightly arrange the sleeve member parts such that a clearance between the sleeve member parts is nearly removed. However, since corner portions of a shapeable material (preform) are not much deformed when the shapeable material is shaped in the shaping mold as described above, the risk of a molding burr and a fine swelling (bump) being formed by the entering of shapeable material into the above clearance can be decreased by arranging the sleeve member parts so as to have the clearance between the sleeve member parts in corner portions when the cavity is viewed as a plan view.

The form of the transfer shaping surface of a movable mold member and the form of the transfer shaping surface of a fixed mold member constituting a shaping mold when the transfer shaping surfaces are viewed as plan views are properly selected depending upon the form of a shaped article to be obtained. And, the form of the transfer shaping surface of the movable mold member and the form of the transfer shaping surface of the fixed mold member of the shaping mold I of the present invention when these shaping surfaces are viewed as plan views can be also selected depending upon a shaped article to be obtained by means of the shaping mold I. However, for making it easier to nearly remove the clearance between each side surface of the fixed mold member and the sleeve member and the clearance between the sleeve member parts, preferably, the side surfaces of the fixed mold member are formed as flat surfaces, the inner side surfaces of the sleeve member parts at a time of use are also formed as flat surfaces, and the sleeve member parts to be placed side by side at a time of use are brought into surface-surface contact. Further, preferably, side surfaces of the movable mold member are formed as flat surfaces.

In the shaping mold I of the present invention, therefore, the movable mold member (upper or lower mold member) and the fixed mold member (lower or upper mold member) are preferably produced so as to have polygonal forms when viewed as plan views. The shaping mold I of the present invention is preferably a shaping mold for producing, by mold shaping, a shaped article having a solid shape which shows a polygonal form when viewed as a plan view and having flat side surfaces.

When the form of the movable mold member viewed as a plan view and the form of the fixed mold member viewed as a plan view are arranged to be polygonal forms, preferably, the forms of the sleeve member parts are selected so as not to form one side surface of a shaped article with two or more transfer shaping surfaces, in other words, so as to form one side surface of a shaped article with a single transfer shaping surface.

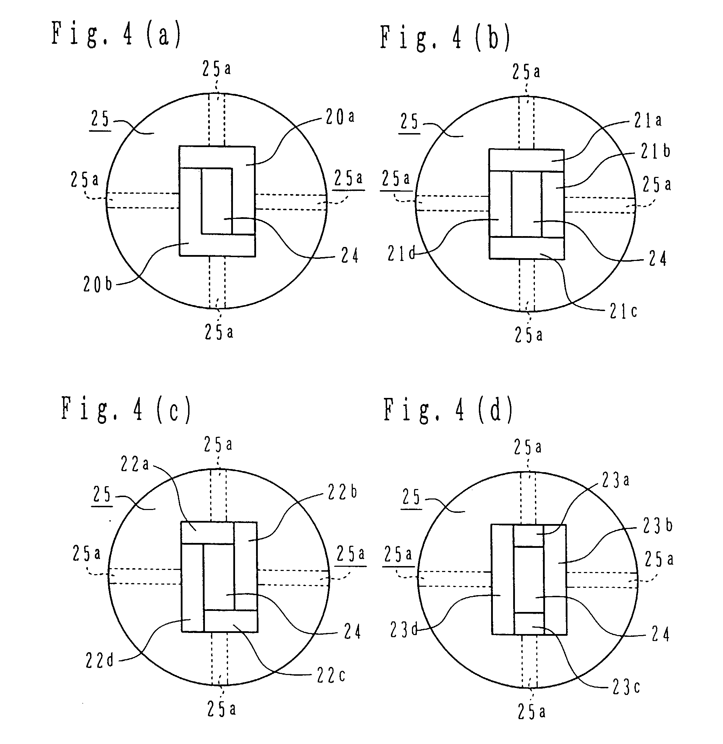

In this case, the forms of the sleeve member parts may be selected so as to shape a plurality of side surfaces of a shaped article with a single sleeve member part 20a or 20b as shown in Fig. 4(a). Otherwise, the forms of the sleeve member parts may be selected so as to shape one side surface of a shaped article with a single sleeve member part, any one of 21a to 21d, 22a to 22d and 23a to 23d, as shown in Figs. 4(b) to 4(d). Of arrangements of the sleeve member parts shown in Figs. 4(a) to 4(d), the arrangement of the sleeve member parts shown in Fig. 4(c) is the most preferred from the viewpoint of removing a clearance between sleeve member parts positioned side by side. From the viewpoint of the cost of production of the sleeve member parts, the fewer the sleeve member parts in number, the more preferred.

In Figs. 4(a) to 4(d), reference numeral 24 indicates a fixed mold member (lower or upper mold member), and reference numeral 25 indicates the above outer frame. Further, reference numeral 25a indicates a threaded runner (internal threads) made in the outer frame 25 from its circumference toward a center, and a screw (not shown) is tightened into the threaded runner 25a so as to reach a sleeve member part through the outer frame 25, and in this manner, the sleeve member parts can be fixed to side surfaces of the fixed mold member under force in a tightly attached state.

When the forms of the sleeve member parts are selected as described above, not only the fabrication of the sleeve member parts can be eased, but also the following advantages can be further attained.

Even when the sleeve member has a hollow portion whose cross section in a diameter direction has a small rectangular form, the transfer shaping surfaces can be easily improved in surface accuracy. Further, even when the forms of the sleeve member parts are selected so as to shape a plurality of side surfaces of a shaped article with a single sleeve member part, each edge portion(s) formed by the transfer shaping surfaces of one sleeve member part can be easily formed as one line. Naturally, even when the forms of the sleeve member parts are selected so as to shape one side surface of a shaped article with a single sleeve member part, each edge portions in inner side surfaces of the sleeve member constituted of predetermined number of the sleeve member parts can be easily formed as one line. As a result of these, each of edge portions of side surfaces of the upper mold member and edge portions of side surfaces of the lower mold member can be also formed as one line, so that there can be easily advantageously prevented a phenomenon that the upper or lower mold member cannot be inserted into the sleeve member or that an extreme clearance is formed between a corner portion of the sleeve member and a corner portion of the upper or lower mold member.

When the above-explained shaping mold I of the present invention is used, there is prevented a phenomenon that shapeable material enters clearances between side surfaces of the fixed mold member and the sleeve member to cause a molding burr or that a fine swelling (bump) is formed. Further, there is prevented a phenomenon that shapeable material enters clearances between adjacent sleeve member parts to cause a molding burr or that a fine swelling (bump) is formed. There can be therefore easily obtained, by mold shaping, a shaped article required to have high accuracy which does not allow even a fine swelling (bump), to say nothing of a molding burr.

However, when the shaping mold is a type which requires the sliding or movement of the movable mold member within the sleeve member, it is required to provide a clearance, which is at least necessary for the sliding or movement of the movable mold member, between the movable mold member and the sleeve member. In the shaping mold of the above type, it is very difficult to prevent the formation of a molding burr or a fine swelling (bump) on a shaped article, caused by the entering of shapeable material into a clearance between the movable mold member and the sleeve member, by resorting to the shaping mold structure alone. However, when the shaping mold conditions are determined as described later, there can be prevented a phenomenon that shapeable material enters a clearance between the movable mold member and the sleeve member to cause the formation of a molding burr and a fine swelling (bump).

In addition to the above advantages, the shaping mold I of the present invention has the following advantages.
(1) A hard material such as ceramic (SiC, etc.) or a cemented carbide is generally used as a material for a shaping mold. However, the hard material is fragile, and it is liable to break by chipping, etc. Since, however, the sleeve member of the shaping mold I of the present invention is constituted of a plurality of sleeve member parts, it is not required to replace the sleeve member as whole so long as all the sleeve member parts are broken, and it is sufficient to replace the broken sleeve member part. The shaping mold I is therefore excellent in economic performance.
(2) It is relatively difficult to form a release film on inner side surfaces of an integrally formed sleeve member by a sputtering method or an ion plating method. Since, however, the sleeve member of the shaping mold I of the present invention is constituted of a plurality of sleeve member parts, release films can be formed on the sleeve member parts respectively, so that the release films can be easily formed.
(3) For the convenience of fitting the sleeve member to a shaping apparatus, the sleeve member is provided with a screw runner, etc., in some cases, while the material for the sleeve member is generally selected from hard materials (fragile materials) as described in the above (1). As a result, the formation of the above screw runner in a conventional sleeve member requires an additional cost, and the formed screw runner is liable to undergo chipping. In contrast, the shaping mold I of the present invention uses the above outer frame, in which the screw runner, etc., can be provided, and the above outer frame can be fabricated from a material having tenacity and excellent processability. Therefore, the shaping mold I which is almost free from breaking can be easily obtained.
(4) In most of shaping molds constituted of an upper mold member, a lower mold member and a sleeve member, the transfer shaping surface of the movable mold member (upper or lower mold member) is inserted into the sleeve member when mold shaping is carried out. For this reason, a predetermined clearance (approximately 10 µm at the smallest) is formed between the side surfaces of the movable mold member and the inner side surfaces of the sleeve member for permitting the insertion of the movable mold member as far as the insertion reaches a predetermined depth. Similarly, the fixed mold member is used in a state where the transfer shaping surface thereof is positioned within an inner space of the sleeve member. There is therefore formed a clearance (approximately 10 µm at the smallest) between the side surfaces of the fixed mold member and the inner side surfaces of the sleeve member. As a result, when a conventional shaping mold is used, both the movable mold member and the fixed mold member can be eccentrically displaced from the center of the sleeve member within the range of the above clearance in some cases. As a result, even if the same shaping mold is used, the eccentricity differs from one shaped article to another.

In the shaping mold I of the present invention, however, the sleeve member parts are fixed to the side surfaces of the fixed mold member under force in a state where the sleeve member parts are tightly attached to the fixed mold member. Therefore, almost no eccentricity takes place at least between the fixed mold member and the sleeve member. There can be therefore easily obtained a shaped article in which a specific surface relative to the surface shaped with the transfer shaping surface of the sleeve member (side surface of the shaped article), i.e., the surface shaped with the transfer shaping surface of the fixed mold member (upper or lower surface of the shaped article) has high positional accuracy.

The shaping mold I having various advantages as explained above, provided by the present invention, can be used as a shaping mold for obtaining shaped articles having various forms, while it is particularly suitable as a shaping mold for obtaining, by mold shaping, articles required to have high accuracy such as a precision-positioning member including an optical fiber fixing member (e.g. an optical fiber guide block) and an optical parts packaging substrate, a prism, a polygon mirror, or the like.

The shaping mold I can be used for obtaining mold shaped articles having various forms as described above, and the forms of the transfer shaping surface of the movable mold member (upper or lower mold member) and the transfer shaping surface of the fixed mold member (lower or upper mold member) of the above shaping mold I are properly determined as required depending upon a shaped article to be obtained as an end product.

For example, when the shaping mold I is for use as a shaping mold for obtaining an optical fiber guide block, convex portions in a desired number for forming fixing grooves for fixing end portions of optical fibers in the optical fiber guide block are formed in the transfer shaping surface of one of the movable mold member and the fixed mold member.

When the above convex portions are formed in the transfer shaping surface of the fixed mold member, the advantage specified in the above (4) can be attained, and as a result, there can be easily obtained optical fiber guide blocks (to be referred to as "optical fiber guide block(s) A" hereinafter) in which the positional accuracy of the fixing grooves relative to (from) a side surface is high and the above positional accuracy is stabilized among products (optical fiber guide blocks).

When the above optical fiber guide block A is used for producing an optical fiber array in which optical fibers in a predetermined number are fixed, the following advantages can be obtained.

That is, the advantage is that when a plurality of the above optical fiber arrays are produced and used for optically interconnecting optical fibers of the optical fiber arrays, e.g., to incidence ports of optical waveguides by an active alignment method, the optical fibers of the optical fiber array and the incidence ports of optical waveguides can be optically connected by only scanning in a perpendicular direction in operations of optical interconnection after the first operation, since the positions of the optical fibers relative to the incidence ports of the optical waveguides in a horizontal direction in operations after the first are substantially the same as the position of the optical fibers relative to the incidence ports of the optical waveguide in a horizontal direction at the first operation when the optical fiber guide blocks of the optical fiber arrays are produced by means of the same shaping mold I.

Further, when the shaping mold I is worked on highly accurately, i.e., processed highly accurately so as to obtain optical fiber guide blocks in which the variability of positions of fixing grooves from a side surface is the smallest possible, the above effect can be achieved regardless of which shaping mold I is used for producing the optical fiber guide blocks constituting optical fiber arrays.

Further, when a dimensional correction for attaining high positional accuracy of the fixing grooves relative to the bottom surface of an optical fiber guide block to be obtained, which takes account of a dimensional difference between the mold and the shaped article at room temperature, is added to produce the shaping mold I in addition to the positional accuracy of the fixing grooves relative the side surface of the optical fiber guide block, optical fiber arrays which permit passive alignment can be obtained regardless of which shaping mold I is used for producing optical fiber guide blocks constituting the optical fiber arrays. In the shaping mold I of the present invention, the eccentricity of the fixed mold member relative to the sleeve member can be decreased to approximately ±1 µm or smaller.

Among optical fiber guide blocks is an optical fiber guide block of a type having an optical fiber fixing part having an upper surface on which the above fixing grooves are formed in a desired number and a lower-level part having an upper surface formed lower than the upper surface level of the optical fiber fixing part (the optical fiber guide block of the above type will be referred to as "optical fiber guide block B" hereinafter). When the shaping mold I of the present invention is used for producing the above optical fiber guide blocks B, the following advantages can be further obtained.

That is, when the optical fiber guide block B is produced, for improving the accuracy of the fixing grooves to be formed, it is preferred to fabricate a shaping part having a transfer shaping surface for shaping the upper surface of the optical fiber fixing part (the above transfer shaping surface has convex portions in a predetermined number for forming the fixing grooves) and a shaping part having a transfer shaping surface for shaping the upper surface of the lower-level portion from separate materials and mechanically integrate these shaping parts with a fixing frame, etc., to produce one mold (movable mold member or fixed mold member). However, when the two shaping parts are merely integrated with a fixing frame, a clearance is liable to be formed between these shaping parts, and shapeable material is liable to enter the clearance to cause a molding burr. In the shaping mold I of the present invention, the sleeve member is fixed to the fixed mold member under force in a tightly attached state. If the fixed mold member is formed of the above two shaping parts, therefore, the above two shaping parts can be fixed to each other under force when the sleeve member is fixed to the fixed mold member under force in a tightly attached state. As a result, there can be obtained an advantage that the formation of a clearance between the above two shaping parts is prevented so that the formation of a molding burr is also prevented.

When a shaped article is produced by mold shaping, generally, the releasability of the shaped article differs depending upon a shapeable material and a material of the shaping mold, and a release film is provided on a predetermined surface of the shaping mold as required. The shaping mold I and the shaping mold II to be explained below, provided by the present invention, include embodiments provided with the above release film.

The shaping mold II of the present invention will be explained hereinafter.

The shaping mold II of the present invention has an upper mold member, a lower mold member and a sleeve member as described above. One of the upper and lower mold members is a fixed mold member having a transfer shaping surface in which a fine transfer pattern is formed, and it is tightly attached and fixed to the sleeve member so as not to form any clearance with the sleeve member which clearance shapeable material may enter. The other of the upper and lower mold members is a movable mold member movable relative to the sleeve member.

One specific example of the shaping mold having the above structure is one embodiment of the shaping mold I of the present invention, i.e., a shaping mold which is included in the shaping mold I for producing an optical fiber guide block and in which convex portions in a desired number for forming fixing grooves for fixing end portions of optical fibers in an optical fiber guide block are formed in the transfer shaping surface of the fixed mold member.

The most distinguishing feature of the shaping mold II is that the positional accuracy of the fine transfer pattern which positional accuracy is defined on the basis of one side surface of the fixed mold member and the positional accuracy of the fine transfer pattern which positional accuracy is defined on the basis of an inner side surface of the sleeve member tightly attached to the above one side surface of the fixed mold member when the fixed mold member is tightly attached and fixed to the sleeve member, are substantially the same.

The shaping mold II having the above feature has advantages similar to those of the shaping mold I, and in addition to those advantages, it particularly has an advantage that there can be easily obtained a shaped article having the above fine pattern formed under a predetermined positional accuracy relative to a specific side surface. For example, when the shaping mold II is used for producing an optical fiber guide block, there can be easily obtained an optical fiber guide block in which fixing grooves are formed under a predetermined positional accuracy relative to a specific side surface.

When the above optical fiber guide block is used for fabricating an optical fiber array, the optical interconnection of optical fibers constituting the optical fiber array to other optical fibers or optical parts by an active alignment method is eased for reasons in "optical fiber guide block A" described in the explanation of the shaping mold I. Further, there can be easily obtained an optical fiber guide block suitable for the production of an optical fiber array which permits the optical interconnection of optical fibers to other optical fibers or optical parts by a passive alignment method.

The shaping mold II having the above advantages, provided by the present invention, can be used as a shaping mold for producing shaped article having various forms, like the above shaping mold I of the present invention. The shaping mold II is particularly suitable as a shaping mold for producing, by mold shaping, a precision positioning member such as an optical fiber fixing member including an optical fiber guide block or an optical parts packaging substrate.

The shaping mold II can be obtained by forming a fine transfer pattern under a predetermined positional accuracy with one side surface (preferably a flat surface) of a fixed mold member being as a reference surface when the fixed mold member is fabricated, and forming the whole of one inner side surface of a sleeve member part to be fixed to the above reference surface under force at a mold shaping time, as a surface having a flatness which permits a surface-surface contact to the above reference surface when the sleeve member is fabricated.

When the fixed mold member is formed of a plurality of parts (shaping parts), preferably, one side surface of the part (shaping part) in which a fine transfer pattern is formed is used as the above reference surface. Further, in both cases where the fixed mold member is formed of one part (shaping part) and it is formed of a plurality of parts (shaping parts), when the fine pattern has a plurality of grooves or lines-forming convex portions (e.g., convex portions for forming fixing grooves of an optical fiber guide block) which are in parallel with one another, preferably, the right-hand or left-hand side surface of the fixed mold member viewed in the longitudinal direction of the grooves or convex portions is used as the above reference surface.

Since the inner side surfaces of the sleeve member are fixed to predetermined side surfaces of the fixed mold member under force, respectively, when mold shaping is carried out, the distance between each inner side surface of the sleeve member and each predetermined side surface of the fixed mold member is substantially zero. Therefore, the positional accuracy of the fine transfer pattern relative to the predetermined one inner side surface of the sleeve member (one inner side surface fixed to the one predetermined side surface of the fixed mold member when mold shaping is carried out) can be indirectly determined by measuring the fine transfer pattern for a positional accuracy relative to the specific one side surface of the fixed mold member.

The method I and the method II of the present invention will be explained hereinafter.

The method I of the present invention comprises mold shaping a preform with the shaping mold I of the present invention to obtain a shaped article.

Further, the method II of the present invention comprises placing a preform in a cavity of the above shaping mold II of the present invention, mold shaping the preform with the shaping mold II, and thereby obtaining a shaped article to which a fine transfer pattern formed in a transfer shaping surface of the fixed mold member and at least part of a transfer pattern formed in that inner side surface of the sleeve member of which a positional accuracy of the fine transfer pattern which positional accuracy is defined on the basis is substantially the same as a positional accuracy of the fine transfer pattern which positional accuracy is defined on the basis of that side surface of the fixed mold member which is tightly attached and fixed to the above inner side surface of the sleeve member were transferred.

The preform used in the method I or II can be selected from conventional preforms formed of glass, glass-ceramic, a resin and a composite material of a resin and an inorganic filler.

The method I and the method II are the same as a known mold shaping process except that the mold to be used is the above shaping mold I or II. The temperature for mold shaping (shaping temperature) differs depending upon shapeable materials as is well known, and the material for the shaping mold (the shaping mold I or II of the present invention) for use in the method I or II is properly determined depending upon the material of a shaped article to be obtained.

As described already, the shaping mold I of the present invention is particularly suitable as a shaping mold for obtaining, by mold shaping, articles required to have high accuracy such as a precision-positioning member including an optical fiber fixing member (e.g. an optical fiber guide block) and an optical parts packaging substrate, a prism, a polygon mirror, or the like. Therefore, the method I is as well particularly suitable as a method for obtaining, by mold shaping, articles required to have high accuracy such as a precision-positioning member including an optical fiber fixing member and an optical parts packaging substrate, a prism, a polygon mirror, or the like. Further, the shaping mold II of the present invention is particularly suitable as a shaping mold for obtaining, by mold shaping, articles required to have high accuracy such as a precision-positioning member including an optical fiber fixing member (e.g. an optical fiber guide block) and an optical parts packaging substrate. Therefore, the method II is as well particularly suitable as a method for obtaining, by mold shaping, articles required to have high accuracy such as a precision-positioning member including an optical fiber fixing member (e.g. an optical fiber guide block) and an optical parts packaging substrate.

For preventing the formation of a molding burr or a fine swelling (bump) on a shaped article caused by the entering of shapeable material into a clearance between the movable mold member and the sleeve member of a shaped article when the method I or II is used for obtaining the shaped article, it is preferred to satisfy the following condition (a) or (b) or both so that the elongation (flow) of shapeable material (preform) on the movable mold member side is slower (smaller) than the elongation (flow) of shapeable material (preform) on the fixed mold member side.
(a) At an initial stage of mold shaping, the contact area of the movable mold member and a preform is smaller than the contact area of the fixed mold member and the preform.
(b) The temperature of the movable mold member is lower than the temperature of the fixed mold member, and the shaping viscosity of the shapeable material differs approximately by 5 to 100 times between the movable mold member side and the fixed mold member side. The above temperature difference differs depending upon shapeable materials, while it is, for example, 5 to 70°C.

When the transfer shaping surface of the movable mold member or the fixed mold member has a concave-convex surface concerning the above condition (a), the form and size of the transfer shaping surface of the movable mold member or the fixed mold member viewed as a plan view is assumed to be a form and size of the above transfer shaping surface, and it is to be assumed that the so-assumed transfer shaping surface as a whole is brought into contact with the preform, for determining the above contact area.

When the shapeable material is glass, and if the shaping viscosity of the shapeable material on the movable mold member side is less than five times the shaping viscosity of the shapeable material on the fixed mold member side, the following difficulties are caused. That is, (i) even when the above condition (a) is satisfied for carrying out mold shaping, it is difficult to prevent shapeable material from entering a clearance between the movable mold member and the sleeve member to form a molding burr. (ii) When a fine transfer pattern is formed on the fixed mold member, shapeable material is liable to spread into a large space rather than into the above fine transfer pattern, and the filling of shapeable material into the above fine transfer pattern is liable to be deficient. As a result, it is difficult to transfer shape a fine pattern highly accurately in some cases. On the other hand, when the shapeable material is glass and if the shaping viscosity of the shapeable material on the movable mold member side is more than 100 times the shaping viscosity of the shapeable material on the fixed mold member side, the elongation of the glass on the transfer shaping surface of the movable mold member and the elongation of the glass on the transfer shaping surface of the fixed mold member are poorly balanced, and it is therefore difficult to obtain an excellent shaped article. When the shapeable material is glass, the shaping viscosity of the shapeable material on the movable mold member side is preferably approximately 10 to 50 times the shaping viscosity of the shapeable material on the fixed mold member side.

The present invention will be explained with reference to Examples hereinafter referring to drawings, while the present invention shall not be limited to the following Examples.

### Example 1

### (1) Preparation of shaping mold

A cemented carbide containing tungsten carbide as a main component was processed precisely to obtain the following blocks (i) to (v). The blocks (i), (ii) and (v) were obtained in an quantity of 1 each, and the blocks (iii) and (iv) were obtained in a quantity of 2 each.
(i) A block having the form of a 5 x 5 x 7 mm rectangular parallelepiped (thickness 7 mm) and having an upper surface in which eight convex portions for shaping V grooves were formed at a pitch of 250 µm. Each convex portion for shaping a V groove was formed so as to have its longitudinal direction in parallel with one side of the upper surface of the above block, and each convex portion for forming a V groove had a length of 5 mm and a height of 0.15 mm.
(ii) A block having the form of 5 x 7 x 7.25 mm rectangular parallelepiped (thickness 7.25 mm).
(iii) Blocks having the form of 4 x 12 x 10 mm rectangular parallelepiped (thickness 10 mm).
(iv) Blocks having the form of 4 x 13 x 10 mm rectangular parallelepiped (thickness 10 mm).
(v) A block having the form of a disc having a diameter of 40 mm and a thickness of 15 mm and having a convex portion having the form of a rectangular parallelepiped having a size of 4.98 x 11.98 x 1.5 mm (height 1.5 mm) formed on the central area of the upper surface of the block.

Then, a carbon-containing release film having a thickness of 500 angstroms was formed, by an ion plating method, on each of predetermined surfaces of the above blocks (i) to (v), i.e., the upper surfaces of the blocks (i), (ii) and (v), one of two surfaces having the form of a 12 x 10 mm rectangle in the block (iii) when the block (iii) was viewed as a plan view, and one of two surfaces having the form of a 13 x 10 mm rectangle in the block (iv) when the block (iv) was viewed as a plan view. As a result, a first shaping part for a lower mold member was obtained from the above block (i), a second shaping part for a lower mold member was obtained from the above block (ii), first sleeve member parts were obtained from the above blocks (iii), second sleeve member parts were obtained from the above blocks (iv), and an upper mold member was obtained from the above block (v).

When used, the first shaping part for a lower mold member and the second shaping part for a lower mold member are arranged in a predetermined direction to form a lower mold member having the form of a 5 x 12 mm rectangle when viewed as a plan view. The first sleeve member parts and the second sleeve member parts are combined in a predetermined form, to form a sleeve member having a hollow portion having the cross-sectional form of a 5 x 12 mm rectangle in the diameter direction of the hollow portion. The above lower mold member, the above sleeve member and the above upper mold member constitute a shaping mold together with an outer frame to be described in detail below.

The outer frame is used for fixing the first sleeve member parts and the second sleeve member parts to side surfaces of the lower mold member under force in a tightly attached state. The outer frame was prepared by making a 13.1 x 20.1 x 10 mm (depth 10 mm) hole in the center of a disc which was formed of the same material as the above cemented carbide and had a diameter of 40 mm and a thickness of 15 mm and further making 4 screw runners (internal threads) in the disc from its circumference to its center. Each of the above screw runners is formed so as to open in the central portion of each of four side walls of the above hole.

When used, the above first shaping part for the lower mold member, the above second shaping part for the lower mold member, the first sleeve member parts and the second sleeve member parts are arranged as follows by utilizing the above frame.

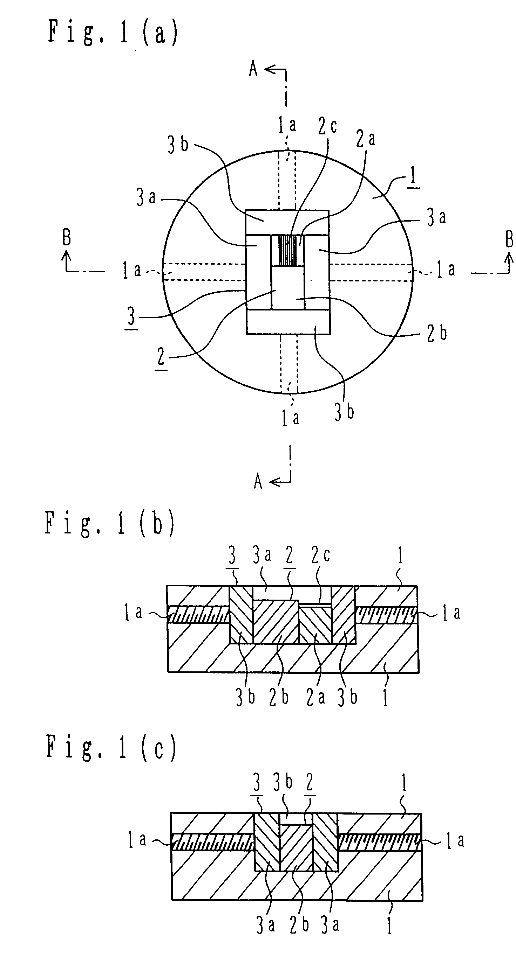

That is, as shown in Figs. 1(a) to (1c), the first shaping part 2a for the lower mold member and the second shaping part 2b for the lower mold member are arranged in the central portion of the above hole made in the outer frame 1, so as to have the form of a 5 x 12 mm rectangle when viewed as a plan view, and they are used as a lower mold member 2. Further, the first sleeve member parts 3a are arranged so as to be fixed to longer side surfaces of the lower mold member 2 under force in a tightly attached state, and the second sleeve member parts 3b are arranged so as to be fixed to shorter side surfaces of the lower mold member 2 under force in a tightly attached state. In this case, the first shaping part 2a for the lower mold member, the second shaping parts 2b for the lower mold member, the first sleeve member parts 3a and the second sleeve member parts 3b are arranged such that their release film surfaces form transfer shaping surfaces.

Then, screws (not shown) are threaded into the screw runners la made in the outer frame 1 so as to reach the first sleeve member parts 3a or the second sleeve member parts 3b through the outer frame la, whereby the first sleeve member parts 3a are fixed to the longer side surfaces of the lower mold member 2 under force in a tightly attached state and the second sleeve member parts 3b are fixed to the shorter side surfaces of the lower mold member 2 under force in a tightly attached state. In this case, the first shaping part 2a for the lower mold member, which constitutes the lower mold member 2, and the second shaping part 2b for the lower mold member, which constitutes the lower mold member 2, are tightly attached to each other, and adjacent pairs of the first sleeve member parts 3a and the second sleeve member parts 3b are brought into surface-surface contact in a tightly attached state to form a sleeve member 3.

In Figs. 1(a) to 1(c), reference numeral 2c indicates convex portions (having the release film formed on the surface) which are formed on the first shaping part 2a for the lower mold member and used for shaping V grooves.

### (2) Mold shaping

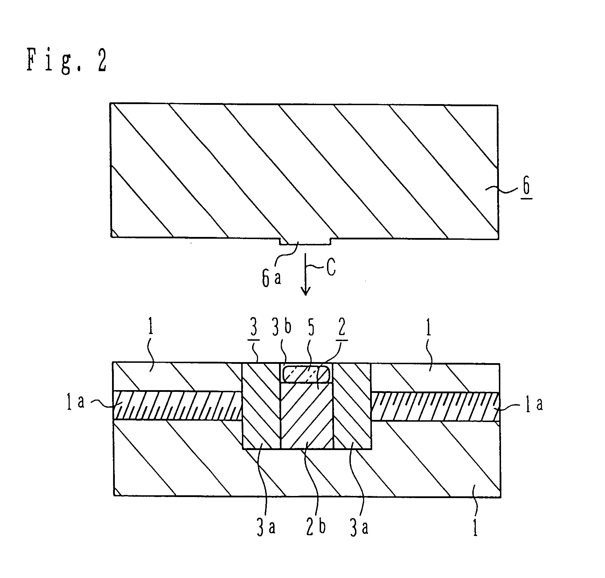

The first shaping part 2a for the lower mold member, the second shaping part 2b for the lower mold member, the first sleeve member parts 3a and the second sleeve member parts 3b were arranged as shown in Fig. 1 by utilizing the outer frame 1, and then, as shown in Fig. 2, a glass preform 5 was placed in the central portion of the upper surface of the lower mold member 2. The glass preform 5 had the form of a 4.5 x 11.5 x 1.8 mm rectangular parallelepiped (thickness 1.8 mm) whose corners were rounded, and it was formed of a glass having a sag temperature of 510°C.

Then, the outer frame 1, the lower mold member 2, the sleeve member 3 and the glass preform 5 were heated in an inert gas atmosphere such that the lower mold member 2 had a temperature of 565°C (corresponding to a temperature at which the glass as a shapeable material had a viscosity of 10⁸ poise), and on the other hand, the upper mold member 6 (prepared in the above (1), see Fig. 2) was heated to 535°C (corresponding to a temperature at which the glass as a shapeable material had a viscosity of 10^{9.4} poise) in the same inert gas atmosphere as the above. And, the upper mold member 6 was lowered toward the lower mold member 2 as shown by an arrow C in Fig. 2, and the glass preform 5 was mold shaped with the upper mold 6 at a load of 100 kg (about 200 kg/cm² as a pressure) for 30 seconds. In this case, the upper mold member 6 was used such that its surface on the side where a convex portion (having the release film formed on the surface) 6a was formed faced the lower mold member 2 side, and the convex portion 6a was allowed to slide within the sleeve member 3 with keeping a clearance of 10 µm from the transfer shaping surfaces of the sleeve member 3.

Then, while the load on the upper mold member 6 was gradually decreased, the shaping mold was cooled to room temperature, and then a shaped article was taken out.

The above-obtained shaped article is an optical fiber guide block having an optical fiber fixing part having an upper surface on which eight fixing grooves (V grooves) for fixing end portions of optical fibers are formed and a lower-level part having an upper surface (flat surface) formed lower than the upper surface level of the optical fiber fixing part. The above optical fiber guide block has the form of a 5 x 12 mm rectangle when viewed as a plan view, the optical fiber fixing part has the cross-sectional form of a 5 x 5 mm rectangle in the horizontal direction (disregarding a portion where the above fixing grooves are formed), and the lower-level part has the cross-sectional form of a 5 x 7 mm rectangle in the horizontal direction. The optical fiber fixing part has a maximum thickness of 1.5 mm, and the lower-level part has a thickness of 1.25 mm.

When the above optical fiber guide block was searched for a molding burr, the molding burr was found in no place. Further, the optical interconnection end face vicinity was searched for a fine swelling (bump), it was not at all found. Edge portions of bottom surface of the above optical fiber guide block were formed of curved surfaces having a small curvature, and the curved surfaces were formed of free surfaces, i.e., surfaces formed without contacting to any transfer shaping surface of the shaping mold.

### Example 2

### (1) Preparation of shaping mold

For obtaining a polygon mirror having the form of a regular hexagonal prism by mold shaping, a lower mold member having the form of a regular hexagonal prism having a predetermined size and being formed of one member, an upper mold member having a convex portion having the form of a regular hexagonal prism having a predetermined size and an outer frame having a hole having the horizontal cross-sectional from of a regular hexagon formed in its center were fabricated in the same manner as in Example 1. The above convex portion of the upper mold member was formed such that it was allowed to slide within a sleeve member to be described later with keeping a clearance of 10 µm from the transfer shaping surfaces of the sleeve member. Further, 6 screw runners (internal threads) were made in the outer frame from its circumference toward its center such that the above screw runners were open in the central portions of six side walls of the above hole having the form of a regular hexagon.

Further, sleeve member parts having various forms, which were to form a sleeve member having a hollow portion having the cross-sectional form of a regular hexagon having a predetermined size in a diameter direction when fixed to side surfaces of the lower mold member in a tightly attached state, were fabricated in the same manner as in Example 1.

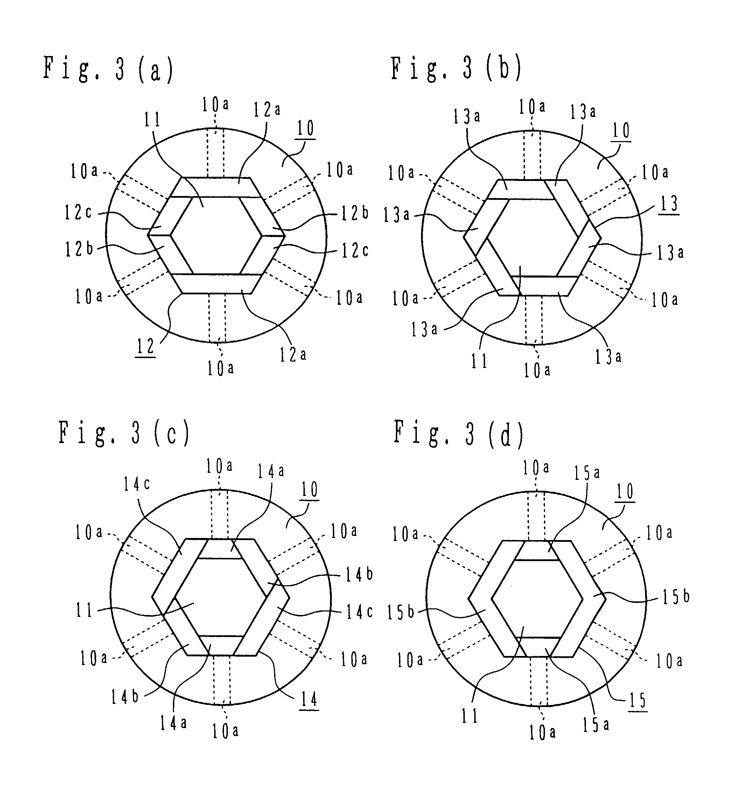

Figs. 3(a) to 3(d) are schematic plan views showing arrangements of the above lower mold member, outer frame and sleeve member parts when they are used.

In a state shown in Fig. 3(a), the lower mold member 11 is placed in the central portion of the above hole made in the outer frame 10, and six sleeve member parts of three kinds, 12a, 12b and 12c, are fixed to side surfaces of the lower mold member 11, respectively, under force in a tightly attached state, to form the sleeve member 12. In a state shown in Fig. 3(b), the lower mold member 11 is placed in the central portion of the above hole made in the outer frame 10, and six sleeve member parts of one kind 13a are fixed to side surfaces of the lower mold member 11, respectively, under force in a tightly attached state, to form the sleeve member 13. In a state shown in Fig. 3(c), the lower mold member 11 is placed in the central portion of the above hole made in the outer frame 10, and six sleeve member parts of three kinds, 14a, 14b and 14c, are fixed to side surfaces of the lower mold member 11, respectively, under force in a tightly attached state, to form the sleeve member 14. In a state shown in Fig. 3(d), the lower mold member 11 is placed in the central portion of the above hole made in the outer frame 10, and four sleeve member parts of two kinds, 15a and 15b, are fixed to side surfaces of the lower mold member 11, respectively, under force in a tightly attached state, to form the sleeve member 15.

The sleeve member parts are fixed to the lower mold member 11 under force by threading screws (not shown) through screw runners 10a made in the outer frame 10 so as to reach the sleeve member parts through the outer frame 10 in the same manner as in Example 1. In this case, adjacent pairs of the sleeve member parts are brought into surface-surface contact in a tightly attached state, to form the sleeve member.

The above lower mold member, sleeve member and outer frame constitute a shaping mold together with the above upper mold member.

### (2) Mold shaping

Polygon mirrors having the form of a regular hexagonal prism were obtained by carrying out mold shaping under the same conditions as those in Example 1 except that the shaping mold was replaced with the shaping molds prepared in the above (1) and the glass preform was replaced with glass preforms having the form of a disc having a size inscribed in each inner side surface of the sleeve member (regular hexagon when its whole shape was viewed as a plan view).

When the above polygon mirrors obtained with the above shaping molds were searched for a molding burr, the molding burr was found on no polygon mirror. Further, no fine swelling (bump) was found in edge portions of side surfaces of the polygon mirrors obtained with the above shaping molds, and all of the above edges did not form any curved surface but formed single lines.

### Example 3

A 4.5 x 11.5 x 1.75 rectangular parallelepiped (thickness 1.75 mm) formed of a glass having the same composition as that of the glass preform used in Example 1 was prepared, and four edges of one main surface present in the thickness direction were chamfered to obtain a glass preform. The above chamfering was carried out such that each surface formed by the chamfering had a width (when the glass preform was viewed in the thickness direction as a plan view) of 0.8 mm.

Then, the glass preform was placed in the central portion of the upper surface of the lower mold member (fixed mold member) of the same shaping mold as that used in Example 1 with the chamfered main surface facing upwardly, and the outer frame, the lower mold member, the sleeve member and the glass preform were heated in an inert gas atmosphere such that the lower mold member had a temperature of 560°C. On the other hand, the upper mold member (movable mold member) was also heated up to 560°C in the same inert gas atmosphere. And, the upper mold member was lowered toward the lower mold member, and the glass preform was mold shaped at a load of 80 kg (about 160 kg/cm² as a pressure) with the above upper mold member for 60 seconds.

Then, while the load on the upper mold member was gradually decreased, the shaping mold was cooled to room temperature, and then a shaped article was taken out.

The contact area of the lower mold member and the glass preform at an initial stage of the mold shaping equals the area of that main surface of the glass preform which is not chamfered in edges. Meanwhile, the contact area of the upper mold member and the glass preform at an initial stage of the mold shaping is smaller than the contact area of the lower mold member and the glass preform by a portion decreased by the chamfering of edges of the main surface which is in contact with the upper mold member.

When the above-obtained optical fiber guide block was searched for a molding burr, the molding burr was found in no place. Further, the optical interconnection end face vicinity was searched for a fine swelling (bump), it was not at all found. The filling of glass in V grooves formed in the optical fiber fixing part seemed to be deficient to slight extent as compared with the optical fiber guide block obtained in Example 1. However, the obtained optical fiber guide block had no problem on the positional accuracy of optical fibers, and it was a practical shaped article.

Edge portions of the bottom surface of the above optical fiber guide block were formed of free surfaces having a small curvature since the glass preform had been chamfered and consequently caused a delay in the filling of glass.

### Example 4

For producing a block for a first shaping part of a lower mold member, the surface of the block, which surface is to be formed as the right or left side surface of the block when the block is viewed in the length direction of convex portions for forming V grooves, is processed to form a flat surface, and the above convex portions for forming V grooves are formed under predetermined positional accuracy with using the above flat surface as a reference surface. Further, the whole of inner side surface (on which a release film is to be formed, and the inner side surface coated with a release film will be referred to as "inner side surface A of sleeve member part" hereinafter) of a block for a sleeve member part which is to be fixed to the above flat surface used as a reference surface (right or left side surface of the block for the first shaping part) is processed to form a flat surface. A shaping mold is produced in the same manner as in Example 1 except for the above.

When the shaping mold produced as described above is used, there can be obtained an optical fiber guide block in which the positional accuracy of the fixing grooves (V grooves) relative to the side surface formed of the inner side surface A of the above sleeve member part is high, no molding burr is found and no fine swelling (bump) is found in an optical interconnection end face vicinity.

Further, there can be obtained an optical fiber guide block in which the positional accuracy of the fixing grooves (V grooves) relative to the side surface formed of the inner side surface A of the above sleeve member part is substantially the same as the positional accuracy of the convex portions for forming the V grooves relative to the flat surface used as the above reference surface in the production of the first shaping part of the lower mold member.

## Claims

1. A shaping mold comprising an upper mold member a lower mold member and a sleeve member, characterised in that the upper or lower mold member being used as a movable mold member which is movable relative to the sleeve member when mold shaping is carried out, the sleeve member being for shaping side surfaces of a shaped article with transfer shaping surfaces of the sleeve member,
the sleeve member being constituted of a plurality of sleeve member parts having transfer shaping surfaces,
a plurality of the sleeve member parts being fixed to side surfaces of the upper mold member or side surfaces of the lower mold member under force in a state where the sleeve member parts are tightly attached to the side surfaces of the upper mold member or the side surfaces of the lower mold member when the sleeve member parts are used.

2. The shaping mold of claim 1, wherein the shaping mold further has an outer frame for fixing the sleeve member parts to the side surfaces of the upper mold member or the lower mold member and the sleeve member parts are fixed to the side surfaces of the upper mold member or the lower mold member in a tightly attached state under force with screws in a predetermined number threaded through the frame.

3. The shaping mold of claim 1 or claim 2, wherein the upper mold member and the lower mold member have transfer shaping surfaces having the form of a polygon when the shaping surfaces are viewed as plan views, and the sleeve member parts have flat inner side surfaces when the shaping mold is used.

4. The shaping mold of any one of claims 1 to 3 wherein the upper mold member or the lower mold member having side surfaces to which a plurality of the sleeve member parts are fixed under force in a tightly attached state is formed of a plurality of shaping parts prepared individually.

5. A shaping mold having an upper mold member, a lower mold member and a sleeve member, characterised by
one of the upper mold member and the lower mold member having a transfer shaping surface in which a fine transfer pattern is formed and being a fixed mold member tightly fixed to the sleeve member so as not to have a clearance with the sleeve member to prevent shapeable material from entering the clearance,
the other of the upper mold member and the lower mold member being a movable mold member which is movable relative to the sleeve member,
a positional accuracy of the fine transfer pattern which positional accuracy is defined on the basis of one side surface of the fixed mold member and a positional accuracy of the fine transfer pattern which positional accuracy is defined on the basis of an inner side surface of the sleeve member tightly attached to the above one side surface of the fixed mold member in a state where the fixed mold member is tightly attached and fixed to the sleeve member, being substantially the same.

6. The shaping mold of claim 5, wherein the fine pattern formed in the transfer shaping surface of the fixed mold member is a transfer pattern of a plurality of lines-forming convex portions formed in parallel with each other or one another at a predetermined pitch, the fixed mold member has a surface which constitutes a right or left side surface when the fixed mold member is viewed in the length direction of a plurality of the convex portions, and the positional accuracy of the fine transfer pattern relative to the above surface of the fixed mold member as a reference surface and the positional accuracy of the fine transfer pattern relative to an inner side surface, as a reference surface, of the sleeve member tightly attached to the above surface of the fixed mold member in a state where the fixed mold member is tightly fixed to the sleeve member are substantially the same.

7. The shaping mold of claim 5 or claim 6, wherein the upper mold member and the lower mold member have transfer shaping surfaces having the form of a polygon when the shaping surfaces are viewed as plan views, and the sleeve member parts have flat inner side surfaces when the shaping mold is used.

8. The shaping mold of any one of claims 5 to 7, wherein the upper mold member or the lower mold member which is used as a fixed mold member is formed of a plurality of shaping parts prepared individually.

9. A shaping process which comprises mold shaping a preform into a shaped article having a predetermined form with the shaping mold recited in claim 1.

10. The shaping process of claim 9, wherein the mold shaping is carried out in a state where the upper mold member or the lower mold member to which the sleeve member parts are not fixed under force and the preform have a smaller contact area at an initial stage of the mold shaping than the upper mold member or the lower mold member to which the sleeve member parts are fixed under force and the preform have at the above initial stage.

11. The shaping process of claim 9 or claim 10, wherein the mold shaping is carried out on the preform formed of glass, glass-ceramic, a resin or a composite material formed of a resin and an inorganic filler.

12. The shaping process of any one of claims 9 to 11, wherein the mold shaping is carried out in a state where the upper mold member or the lower mold member to which the sleeve member parts are not fixed under force has a lower temperature than the upper mold member or the lower mold member to which the sleeve member parts are fixed under force.

13. The shaping process of claim 12, wherein the mold shaping is carried out by setting the upper mold member and the lower mold member at temperatures at which shaping material on a side of the upper mold member or the lower mold member to which the sleeve member parts are not fixed under force has a shaping viscosity 5 to 100 times higher than a shaping viscosity of shaping material on a side of the upper mold member or the lower mold member to which the sleeve member parts are fixed under force.

14. The shaping process of any one of claims 9 to 13, wherein an optical fiber fixing member, an optical parts packaging substrate, a prism or a polygon mirror is obtained as the shaped article.

15. A shaping process of producing a shaped article, which comprises
placing a preform in a cavity of the shaping mold recited in claim 5, mold shaping the preform with the shaping mold, and
thereby obtaining a shaped article to which a fine transfer pattern formed in a transfer shaping surface of the fixed mold member and at least part of a transfer pattern formed in that inner side surface of the sleeve member of which a positional accuracy of the fine transfer pattern which positional accuracy is defined on the basis is substantially the same as a positional accuracy of the fine transfer pattern which positional accuracy is defined on the basis of that side surface of the fixed mold member which is tightly attached and fixed to the above inner side surface of the sleeve member were transferred.

16. The shaping process of claim 15, wherein the mold shaping is carried out in a state where the movable mold member and the preform have a smaller contact area at an initial stage of the mold shaping than the fixed mold member and the preform have at the above initial stage.

17. The shaping process of claim 15 or claim 16, wherein the mold shaping is carried out on the preform formed of glass, glass-ceramic, a resin or a composite material formed of a resin and an inorganic filler.

18. The shaping process of any one of claims 15 to 17, wherein the mold shaping is carried out in a state where the movable mold member has a lower temperature than the fixed mold member.

19. The shaping process of claim 18, wherein the mold shaping is carried out by setting the movable mold member and the fixed mold member at temperatures at which shaping material on a side of the movable mold member has a shaping viscosity 5 to 100 times higher than a shaping viscosity of shaping material on a side of the fixed mold member.

20. The shaping process of any one of claims 15 to 19, wherein an optical fiber fixing member or an optical parts packaging substrate is obtained as the shaped article.
